# EUROPÄISCHE PATENTSCHRIFT

(11) **EP 1 004 356 B1**
(45) Veröffentlichungstag und Bekanntmachung des Hinweises auf die Patenterteilung: **28.12.2005**
(21) Anmeldenummer: 99121447.9
(22) Anmeldetag: 28.10.1999
(51) Int. Cl.: B01J 8/44

(54) **Lochboden für die Erzeugung einer Wirbelschicht**
Perforated bottom for generating a fluidised bed
Fond perforé pour la génération d'un lit fluidisé

(30) Priorität: 02.11.1998 DE 19850332
(43) Veröffentlichungstag der Anmeldung: 31.05.2000
(73) Patentinhaber: NEPRO Neue Prozesstechnik GmbH, 22848 Norderstedt (DE)
(72) Erfinder: Zoellner, Jobst O.A., (DE)
(74) Vertreter: Jaeschke, Rainer

(56) Entgegenhaltungen:
- EP-A- 0 320 282
- EP-A- 0 474 949
- DE-C- 3 325 967
- GB-A- 1 376 916
- US-A- 5 097 755
- PATENT ABSTRACTS OF JAPAN vol. 13, no. 237 (M-833), 5. Juni 1989 (1989-06-05) -& JP 01 049817 A (TPKYO NOUKOU UNIV.), 27. Februar 1989 (1989-02-27)
- PATENT ABSTRACTS OF JAPAN vol. 1996, no. 2, 29. Februar 1996 (1996-02-29) -& JP 07 265683 A (FREUNT IND. CO. LTD.) -& DATABASE WPI Section Ch, Week 199550 Derwent Publications Ltd., London, GB; Class J04, AN 1995-388969 XP002132737 & JP 07 265683 A (FREUND IND. CO. LTD. & OKAWARA SEISAKUSHO K.K.), 17. Oktober 1995 (1995-10-17)

## Beschreibung

Die Erfindung betrifft einen Lochboden für die Erzeugung einer Wirbelschicht in einem Behältnis zum thermischen Behandeln eines körnigem Gutes, welcher Lochboden eine Vielzahl von Löchern, durch die das gasförmige Medium zur Bildung der Wirbelschicht strömt, und Bereiche aufweist, in denen größere Anzahl von Löchern pro Flächeneinheit als auf dem übrigen Lochboden vorgesehen ist.

Es ist bekannt, daß zur Erhöhung der Wärmeübertragung oder zur besseren Ausnutzung eines körnigen Brennstoffes in einem Behältnis eine Wirbelschicht erzeugt wird. Im einzelnen wird dabei so vorgegangen, daß das Behältnis einen Lochboden mit einer Vielzahl von Durchgangsbohrungen aufweist, durch die das fluidisierende Mittel strömt. Dieses Mittel kann beispielsweise die Verbrennungsluft sein. Das gasförmige Medium kann aber auch Kühlluft oder Heizluft sein oder aber lediglich zur Erzeugung der Wirbelschicht dienen.

Bei der thermischen Behandlung von körnigem Gut, beispielsweise beim Rösten von Kaffee oder Erdnüssen, ist es erforderlich, daß das Gut gleichmäßig mit den Heizgasen und/oder den Kühlgasen und/oder einem Befeuchtungsmittel beaufschlagt wird. Es ist daher bekannt, einen solchen Röstvorgang in einer kontinuierlichen Wirbelschicht durchzuführen. Es hat sich gezeigt, daß mit herkömmlichen Lochböden, die eine regelmäßige Lochung aufweisen, zwar eine Wirbelschicht erzeugt werden kann, jedoch bilden sich Durchbrüche der Schicht und eine ausreichende, gleichmäßige Durchmischung des körnigen Guts ist nicht gegeben.

Aus der EP-A-0 320 282 ist ein Siebboden bekannt, der einen umlaufenden Randbereich und einen mittigen Bereich mit einer größeren Anzahl von Löchern aufweist. Die JP-A-1049817 beschreibt einen Lochboden mit einem äußeren ringförmigen Bereich, in dem eine größere Anzahl von Löchern als im inneren Bereich vorhanden ist. Die JP-A-7265683 offenbart einen Siebboden, in dem streifenförmige Bereiche vorhanden sind, die jeweils in einer Transportrichtung eine zunehmende Anzahl von Löchern aufweisen. Die GB-A-1376916 beschreibt einen Lochboden, in dem streifenförmige Bereiche mit jeweils einer anderen Art von Löchern vorhanden sind, nämlich einmal mit in Transportrichtung gerichteten Öffnungen und einmal mit vertikalen Öffnungen. Aus der EP-A-0 747 949 ist es bekannt, auf dem Lochboden streifenförmige Bereiche mit jeweils unterschiedlicher Anzahl von Löchern pro Flächeneinheit vorzusehen. Die Löcher sind nach unten muschelförmig ausgebildet, um eine Vorzugsrichtung des einströmenden Gases zu erzeugen. Aus der DE-C-33 25 967 ist es bekannt, das Gut auf einem Rüttelsieb zu transportieren. Es sind gelochte Bereiche vorhanden, deren Löcher unterschiedlich große lichte Abmessungen aufweisen. Es soll dadurch ein wellenförmiges Wirbelbett erzeugt werden. In allen Fällen wird eine erzwungene und gerichtete Strömung in der Wirbelschicht erzeugt. Dies ist bei einem Röstvorgang jedoch nicht erwünscht.

Der Erfindung liegt die Aufgabe zu Grunde, einen Lochboden der eingangs geschilderten Art so auszubilden, dass eine bessere Durchmischung des körnigen Gutes in der Wirbelschicht bewirkt werden kann.

Die Aufgabe wird gemäß der Erfindung dadurch gelöst, dass eine Vielzahl von Bereichen mit einer größeren Anzahl von Löchern vorhanden ist, welche Bereiche gleichmäßig und mit gleichbleibenden Abständen verteilt über den Lochboden angeordnet sind. Tatsächlich werden örtliche Fontänen gebildet, die in dem so erzeugten "spouting bed" für eine intensive Durchmischung des Gutes sorgen. Es wird eine gleichförmige Beaufschlagung des Gutes mit dem gasförmigen Medium bewirkt, so dass beispielsweise ein Röstvorgang bei geringerer Temperatur und in kürzerer Zeit durchgeführt werden kann. Das häufig empfindliche Röstgut wird somit schonend behandelt.

Gemäß einer bevorzugten Ausführungsform der Erfindung ist vorgesehen, dass die Bereiche mit größerer Anzahl von Löchern symmetrisch auf dem Lochboden verteilt sind. Dadurch wird vermieden, dass sich bei ansonsten gleichförmiger Gasströmung Bereiche bilden, in denen lediglich eine geringere Durchmischung des körnigen Gutes stattfindet. Die Gleichmäßigkeit der thermischen Behandlung wird somit gewährleistet.

Grundsätzlich ist die Ausbildung der Löcher beliebig. Es ist lediglich erforderlich, dass die Löcher kleiner sind als ein einzelnes Partikel des zu behandelnden körnigen Guts. Ein Hindurchfallen des Gutes wird somit verhindert. Es kann vorgesehen werden, dass die Löcher im wesentlichen gleichgroß und kreisrund oder länglich ausgebildet sind. Die längliche Ausbildung solcher Löcher hat den Vorteil, daß sich das körnige Gut nicht ohne weiteres festsetzen kann. Eventuell dennoch festgesetzte Partikel können leicht wieder entfernt werden. Es ist nicht erforderlich, daß die Löcher streng symmetrisch auf dem Lochboden verteilt angeordnet sind, solange eine gewisse Gleichmäßigkeit gegeben ist.

Es hat sich gezeigt, daß mit einem solchen Lochboden eine hervorragend durchmischte Wirbelschicht erzeugt werden kann. Ein mit einem solchen Lochboden ausgebildeter Behälter eignet sich daher vor allem für die gleichmäßige thermische Behandlung von relativ empfindlichen Gut. Dies ist beispielsweise beim Rösten vom Kaffee und/oder beim Rösten von Erdnüssen der Fall. Grundsätzlich können aber auch andere Güter in dieser Weise behandelt werden. Auch ist es möglich, einen solchen Lochboden bei der Verbrennung von körnigen Brennstoffen, beispielsweise Braunkohle, einzusetzen. Auch kann dieser Lochboden sowohl im chargenweisen Betrieb als auch kontinuierlich oder quasi-kontinuierlich eingesetzt werden.

Es kann beispielsweise vorgesehen werden, daß dieser Lochboden in einem Behälter eingesetzt wird, der zum quasi-kontinuierlichen Rösten von Kaffee und/oder Erdnüssen dient, wie es in dem deutschen Gebrauchsmuster 298 10 911.5 des Anmelders beschrieben ist. Insbesondere ist es möglich, auch kleiner Röstanlagen mit einem Röster zu versehen, der mit einem derartigen Siebboden ausgestattet ist. Es wird somit auch möglich sein, kleiner Mengen Röstgut wirtschaftlich in einer Wirbelschicht zu rösten.

Weiterhin hat sich gezeigt, daß sich diese Ausbildung des Siebbodens auch für das Trocknen von Gut eignet. Es kann daher vorgesehen werden, daß mit einem derartigen Siebboden ein Trockner beispielsweise für frische Kaffeebohnen ausgerüstet ist. Der Trocknungsprozeß kann beschleunigt und vor Ort an der Plantage durchgeführt werden, so daß beispielsweise ein Schimmelpilzbefall verhindert werden kann.

Die Erfindung wird im folgenden anhand der schematischen Zeichnungen näher erläutert. Es zeigen:

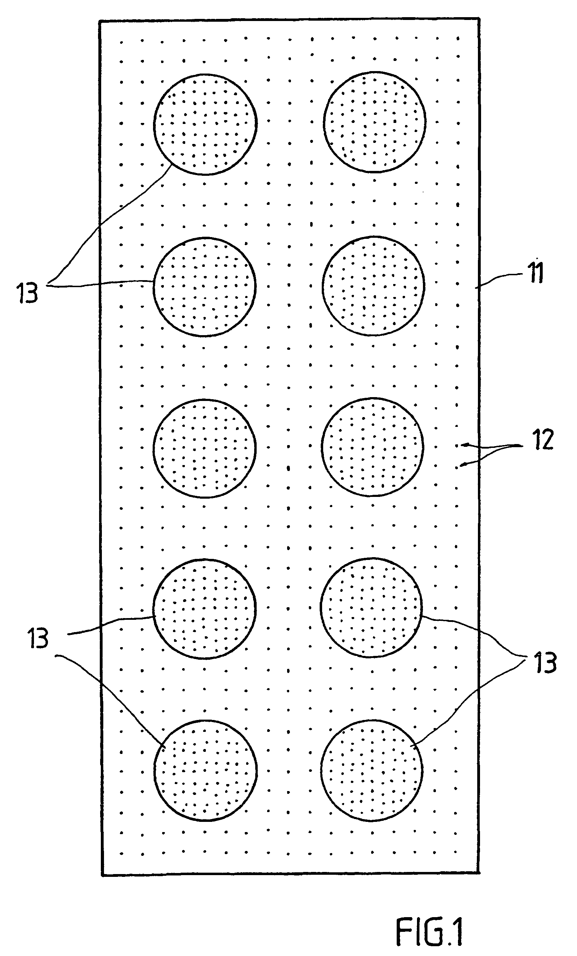

- Fig. 1: eine Draufsicht auf einen Lochboden gemäß der Erfindung und
- Fig. 2: eine Draufsicht auf einen Lochboden gemäß einer anderen Ausführungsform der Erfindung.

Der in der Zeichnung dargestellte Lochboden 11 weist eine Vielzahl von Löchern 12 auf, die in gleichmäßigen Rastern auf dem Lochboden verteilt sind. Die Löcher haben alle die gleichen lichten Abmessungen und können die gleiche innere Kontur aufweisen. Im einzelnen ist die Anordnung so getroffen, daß Bereiche 13 vorgesehen sind, in denen, ausgehend von einer gleichmäßigen Verteilung der Löcher pro Flächeneinheit, eine größere Anzahl von Löchern vorhanden sind. Die Bereiche sind im wesentlichen gleichmäßig über der Fläche des Siebbodens verteilt. Insgesamt kann vorgesehen werden, daß die Bereiche mit einer größeren bzw. kleineren Anzahl von Löchern etwa 10% bis 25% der Gesamtfläche des Lochbodens ausmachen.

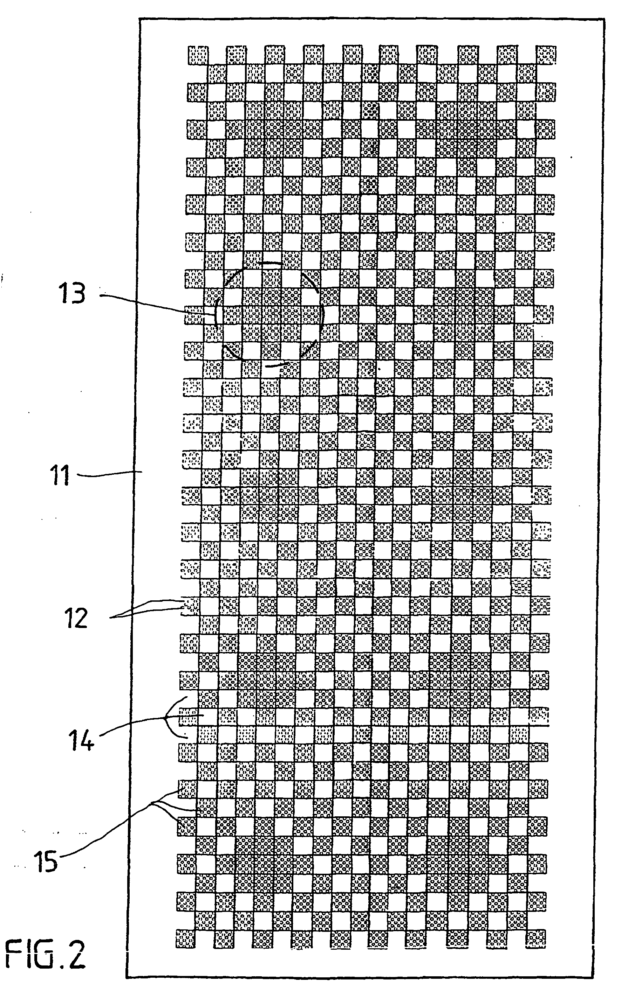

In der Fig. 2 ist der Lochboden rasterförmig ausgebildet. Es sind Flächenabschnitte 14 vorhanden, die mit keinen Löchern versehen sind. Weiterhin sind Flächenabschnitte 15 vorgesehen, die eine vorbestimmte Anzahl von Löchern aufweisen. Die Flächenabschnitte 15 weisen hierbei die gleiche Lochung auf. Diese Flächenabschnitte 14, 15 können vorzugsweise gleichgroß sein und sind bei dem in der Zeichnung dargestellten Ausführungsbeispiel quadratisch ausgebildet. Die Flächenabschnitte 14, 15 sind regelmäßig und schachbrettartig auf dem Lochboden verteilt angeordnet, so daß sich eine gleichmäßige Verteilung der Löcher pro Flächeneinheit ergibt.

Die Bereiche 13 mit einer größeren Anzahl von Löchern 12 werden dadurch gebildet, daß die Flächenabschnitte 15 mit Löchern zu größeren Flächenabschnitten zusammengefaßt werden. Grundsätzlich ist es aber auch möglich, einen Lochboden mit gleichmäßiger Verteilung der Löcher mit Bereichen einer größeren Anzahl von Löchern zu versehen, indem in diesen Bereichen zusätzliche Löcher erzeugt werden. Auch ist es möglich, einen Lochboden mit Bereichen zu versehen, in denen die Anzahl der Löcher geringer ist, als in der zu Grunde liegenden gleichmäßigen Verteilung. Diese Möglichkeit ist in der Zeichnung nicht dargestellt.

Durch das Vorsehen solcher Bereiche mit einer größeren Anzahl von Löchern pro Flächeneinheit wird bewirkt, daß in diesen Bereichen eine verstärkte Zufuhr des gasförmigen Mediums zur Erzeugung der Wirbelschicht eintritt. Dies wiederum hat zur Folge, daß sich das körnige Gut über den Lochboden besser durchmischen kann. Es wird somit eine gleichmäßige Beaufschlagung des körnigen Gutes mit dem gasförmigen Medium erzielt.

Wie im einzelnen die Bereiche mit der größeren bzw. kleineren Anzahl von Löchern pro Flächeneinheit ausgebildet sind und welchen Abstand sie zueinander aufweisen, hängt unter anderem von der Art des zu behandelnden Guts ab. Die Bereiche können rund, rechteckig oder quadratisch ausgebildet sein. Es kann vorgesehen werden, daß der Abstand zwischen zwei derartigen Bereichen im wesentlichen dessen äußeren Abmessungen entspricht oder größer ist. Die Anzahl der Löcher in den Bereichen mit größerer Anzahl kann dem 1,5 bis 3-fachen der Anzahl der Löcher des übrigen Lochbodens mit der gleichförmigen Lochung betragen. Die Anzahl der Löcher in den Bereichen mit kleinerer Anzahl kann etwa dem 0,25 bis 0,75-fachen der Anzahl der Löcher des übrigen Lochbodens betragen. Damit wird eine gute Verwirbelung erzielt.

## Patentansprüche

1. Lochboden für die Erzeugung einer Wirbelschicht in einem Behältnis zum thermischen Behandeln eines körnigen Gutes, welcher eine Vielzahl von Löchern mit gleichen lichten Abmessungen, durch die das gasförmige Medium zur Bildung der Wirbelschicht strömt, und, ausgehend von einer gleichmäßigen Lochung, Bereiche (13) aufweist, in denen eine größere Anzahl von Löchern (12) pro Flächeneinheit als auf dem übrigen Lochboden vorhanden ist, **dadurch gekennzeichnet, dass** eine Vielzahl von Bereichen (13) mit einer größeren Anzahl von Löchern (12) vorhanden ist, welche Bereiche (13) gleichmäßig und mit gleichbleibenden Abständen zueinander regelmäßig verteilt auf dem Lochboden angeordnet sind und durch die mehr gasförmiges Medium derart strömt, dass örtliche Fontänen in der Wirbelschicht erzeugt werden.

2. Lochboden nach Anspruch 1, **dadurch gekennzeichnet, dass** die Bereiche rund, kreisförmig, quadratisch oder rechteckig ausgebildet sind.

3. Lochboden nach einem der Ansprüche 1 oder 2, **dadurch gekennzeichnet, dass** die Bereiche mit größerer Anzahl von Löchern symmetrisch auf den Lochboden verteilt sind.

4. Lochboden nach einem der Ansprüche 1 bis 3, **dadurch gekennzeichnet, dass** der Abstand zwischen zwei Bereichen (13) mit größerer Anzahl von Löchern im wesentlichen den Abmessungen der Bereiche entspricht oder größer ist.

5. Lochboden nach einem der Ansprüche 1 bis 4, **dadurch gekennzeichnet, dass** die Anzahl der Löcher in den Bereichen mit größerer Anzahl etwa dem 1,5 bis 3-fachen der Anzahl der Löcher des übrigen Lochbodens beträgt.

6. Lochboden nach einem der Ansprüche 1 bis 5, **dadurch gekennzeichnet, dass** der Lochboden (11) rasterförmig verteilte Flächenabschnitte (14, 15) ohne und mit Löchern (12) aufweist, und dass die Bereiche (13) mit größerer Anzahl von Löchern durch den Zusammenschluss mehrerer Flächenabschnitte (15) mit Löchern (12) gebildet werden.

7. Lochboden nach Anspruch 6, **dadurch gekennzeichnet, dass** die Flächenabschnitte (15) mit Löchern (12) jeweils eine gleiche Lochung aufweisen.

8. Lochboden nach einem der Ansprüche 1 bis 7, **dadurch gekennzeichnet, dass** die Löcher (12) kreisrund oder länglich ausgebildet sind.

## Claims

1. A perforated bottom plate for the production of a fluidised bed within a container for the thermal treatment of a granular material, which comprises a plurality of holes with identical inside dimensions, through which the gaseous medium flows to form the fluidised bed, and, based on a uniform perforation, comprises areas (13) in which a larger number of holes (12) is provided per unit of area than on the rest of the perforated bottom plate,
**characterised in that** a plurality of areas (13) with a larger number of holes (12) is provided, which areas (13) are regularly distributed over the perforated bottom plate in a uniform manner and with constant spacing and through which more gaseous medium flows in such a manner that local fountains are produced in the fluidised bed.

2. A perforated bottom plate according to Claim 1,
**characterised in that** the areas have a round, circular, square or rectangular shape.

3. A perforated bottom plate according to one of Claims 1 or 2,
**characterised in that** the areas with a larger number of holes are distributed symmetrically over the perforated bottom plate.

4. A perforated bottom plate according to one of Claims 1 to 3,
**characterised in that** the distance between two areas (13) having a larger number of holes substantially corresponds to or is greater than the dimensions of the areas,.

5. A perforated bottom plate according to one of Claims 1 to 4,
**characterised in that** the number of holes in the areas with a larger number is roughly 1.5 to 3 times the number of holes in the rest of the perforated bottom plate.

6. A perforated bottom plate according to one of Claims 1 to 5,
**characterised in that** the perforated bottom plate (11) comprises planar portions (14, 15) distributed in a grid without and with holes (12),
and **in that** the areas (13) with a larger number of holes are formed by combining several planar portions (15) having holes (12).

7. A perforated bottom plate according to Claim 6,
**characterised in that** the planar portions (15) with holes (12) in each case have an identical perforation.

8. A perforated bottom plate according to one of Claims 1 to 7,
**characterised in that** the holes (12) have a circular or elongated shape.

## Revendications

1. Fond perforé pour la production d'un lit fluidisé dans un récipient pour le traitement thermique d'un produit granuleux, lequel présente une multitude de perforations ayant les mêmes dimensions et à travers lesquelles coule le fluide gazeux pour former le lit fluidisé, et, à partir d'une perforation régulière, des zones (13) comportant un nombre plus grand de perforations (12) par unité de surface que dans le reste du fond perforé,
**caractérisé en ce que**
de nombreuses zones (13) ayant un plus grand nombre de perforations (12) sont réparties de manière homogène et régulière l'une par rapport à l'autre à des distances constantes sur le fond perforé et à travers lesquelles coule une quantité plus importante de fluide gazeux de manière à produire des fontaines locales dans le lit fluidisé.

2. Fond perforé selon la revendication 1,
**caractérisé en ce que**
les zones sont rondes, circulaires, carrées ou rectangulaires.

3. Fond perforé selon l'une quelconque des revendications 1 ou 2,
**caractérisé en ce que**
les zones ayant un plus grand nombre de perforations sont réparties de manière symétrique sur le fond perforé.

4. Fond perforé selon l'une quelconque des revendications 1 à 3,
**caractérisé en ce que**
la distance entre deux zones (13) ayant un plus grand nombre de perforations correspond essentiellement aux dimensions des zones ou est plus importante.

5. Fond perforé selon l'une quelconque des revendications 1 à 4,
**caractérisé en ce que**
le nombre de perforations dans les zones en ayant un nombre plus important est d'environ 1,5 à 3 fois plus important que le nombre de perforations du reste du fond perforé.

6. Fond perforé selon l'une quelconque des revendications 1 à 5,
**caractérisé en ce que**
le fond perforé (11) présente des segments de surface (14, 15) sans et avec perforations (12), répartis en forme de grille, et les zones (13) ayant un plus grand nombre de perforations sont formées par la réunion de plusieurs segments de surface (15) ayant des perforations (12).

7. Fond perforé selon la revendication 6,
**caractérisé en ce que**
les segments de surface (15) ayant des perforations (12) présentent chacun une même perforation.

8. Fond perforé selon l'une quelconque des revendications 1 à 7,
**caractérisé en ce que**
les perforations (12) sont circulaires ou oblongues.
